# EUROPÄISCHE PATENTSCHRIFT

(11) **EP 1 729 667 B1**
(45) Veröffentlichungstag und Bekanntmachung des Hinweises auf die Patenterteilung: **01.07.2009**
(21) Anmeldenummer: 05716413.9
(22) Anmeldetag: 29.03.2005
(51) Int. Cl.: A61C 5/11, A61C 13/00

(54) **VERFAHREN ZUR HERSTELLUNG EINER ZAHNKRONE**
METHOD FOR PRODUCING A DENTAL CROWN
PROCEDE DE PRODUCTION D'UNE COURONNE DENTAIRE

(30) Priorität: 29.03.2004 EP 04007587
(43) Veröffentlichungstag der Anmeldung: 13.12.2006
(73) Patentinhaber: Merz Dental GmbH, 24321 Lütjenburg (DE)
(72) Erfinder: BOROWSKI, Christian, 24111 Kiel (DE); KNUTH, Holger, 24321 Lütjenburg (DE)
(74) Vertreter: Glawe, Delfs, Moll
(86) Internationale Anmeldenummer: PCT/EP2005/003251
(87) Internationale Veröffentlichungsnummer: WO 2005/092233

(56) Entgegenhaltungen:
- EP-A- 0 087 022
- EP-A- 0 455 854
- US-A- 4 129 946
- US-A- 4 718 849
- US-A- 5 383 752
- US-A1- 2002 074 675

## Beschreibung

Die Erfindung betrifft ein Verfahren zur Herstellung eines genauen Verbundes zwischen einer Krone, auch mehrgliedrig und verbunden, als Provisorium oder Endversorgung und einer Maschinenanbindung, wobei die Erfindung ein Zahnmodul, ein Verbindungsmodul und eine beliebige Maschinenanbindung umfasst, die es ermöglicht eine genaue maschinengeführte Bearbeitung an dem Zahnmodul vorzunehmen.

Verfahren zur Herstellung von Zahnkronen sind aus offenkundiger Vorbenutzung bekannt. Bezüglich der Verweildauer des Zahnersatzes unterscheidet man zwei Indikationen. Eine Indikation ist die Herstellung von provisorischem Zahnersatz, der nur für eine begrenzte Zeit von wenigen Tagen bis Wochen eingesetzt wird. Die andere Indikation sind als definitiver Zahnersatz dienende Zahnkronen, die häufig Jahre oder Jahrzehnte im Munde des Patienten verweilen. Für die letztgenannte Indikation von Zahnkronen ist es besonders wichtig, dass außer der Bissfunktionalität auch ein ansprechendes optisches Äußeres des Zahns und seiner Oberfläche erreicht wird. Als Material hat sich insbesondere Keramik für als Endversorgung dienende Kronen durchgesetzt. Es verbindet bezüglich beider Funktionalitäten gute Eigenschaften. Allerdings ist Keramik als Material in seiner Bearbeitung aufwendig.

Zur Verringerung des Aufwands ist es bekannt, Kunststoffmaterial anstelle von Keramik zu verwenden. Das Kunststoffmaterial hat zwar den Vorteil, dass es wesentlich kostengünstiger ist, jedoch kann aus ihm nicht wie bei Keramikmaterial durch Fräsen eine Zahnkrone unmittelbar hergestellt werden. Die beim Fräsen erreichbare Oberflächengüte ist beim Kunststoffmaterial nicht hoch genug, um die an als Endversorgung dienende Zahnkrone gestellten Anforderungen zu erfüllen. Es ist daher vorgeschlagen worden, als Ausgangspunkt modifizierte Konfektionszähne, ähnlich wie sie für herausnehmbaren Zahnersatz verwendet werden, heranzuziehen und diese mit einer geeigneten Halterung zu versehen. Schwierigkeiten bereitet dabei das Herstellen einer maßgenauen Verbindung zwischen Zahn und Halterung.

Weiter ist es bekannt, Zahnersatz aus Kunststoffmaterial unmittelbar am Patienten mittels einer Einmalform zu bilden (US-A-4,129,946). Dabei dient eine an der Form angeordnete Halterung zur Handhabung, das Zahnimplantat selbst weist keine Halterung auf. Das Verfahren zielt auf Einzelstücke ab, es eignet sich nicht zur kostengtinstigen Herstellung, insbesondere serienmäßigen Herstellung.

Dokument EP-A-0 455 854 offenbart ein Verfahren zur Herstellung einer Zahnkrone, wobei ein Rohling ein Zahnmodul und eine Halterung umfasst, umfassend das Herstellen eines Zahnmoduls in einem ersten Prozess und das Ausbilden einer Präparation an einer Unterseite des Zahnmoduls, wobei Halterung und Zahnmodul aus dem selben material hergestellt werden.

Der Erfindung liegt die Aufgabe zugrunde, ein Verfahren der eingangs genannten Art dahingehend zu verbessern, mit weniger Aufwand eine maßgenaue Herstellung zu ermöglichen.

Die erfindungsgemäße Lösung liegt in den Merkmalen des Anspruchs 1. Vorteilhafte Weiterbildungen sind Gegenstand der abhängigen Ansprüche.

Erfindungsgemäß ist bei einem Verfahren zur Herstellung einer Zahnkrone als Endversorung, wobei die Krone ein Zahnmodul und eine Halterung umfasst, umfassend Herstellen des Zahnmoduls in einem ersten Prozess mit hoher Oberflächengüte und Ausbilden einer Ausnehmung als Präparation vorgesehen, dass die Halterung aus demselben Material wie das Zahnmodul hergestellt wird und in einem zweiten Prozess das Zahnmodul und die Halterung zu einer Einheit verbunden werden und die Präparation an der Unterseite der Halterung ausgebildet wird, wobei die Halterung mit dem Zahnmodul an dessen Unterseite verbunden wird.

Nachfolgend seien zuerst einige verwendete Begriffe erläutert:

Unter einem Zahnmodul wird der Teil eines als Zahnersatz dienenden Krone verstanden, der den Zahnkörper bildet, der zu seinem überwiegenden Teil sichtbar aus dem Zahnfleisch herausragt und an dessen Oberseite eine Bissfläche ausgebildet ist (Oberseite ist hier funktional zu verstehen und stimmt für den Fall des Unterkiefers mit den realen räumlichen Verhältnissen nach der Einsetzen überein, im Fall des Oberkiefers ist es genau umgekehrt). Das Zahnmodul dient nicht zur Verankerung im Kiefer. Dazu ist eine gesonderte Verankerung vorgesehen. Bei ihr kann es sich um eine künstliche Verankerung (Implantat) handeln, die z.B. in den Kieferknochen eingeschraubt ist, oder um einen Zahnstumpf, der über die natürliche Wurzel im Kiefer verankert ist.

Unter einer Präparation wird eine an der Unterseite (d.h. an der der Bissfläche gegenüberliegenden Seite) angeordnete Ausnehmung verstanden, die zur Befestigung der Krone für den Halt auf einem Implantat bzw. Stumpf im Kiefer dient.

Erfindungsgemäß wird die Verbindung der Halterung im Zahnmodul an dessen Unterseite ausgeführt. Sie befindet sich damit an der Seite, die nach dem Einsetzen kieferwärts gerichtet und somit den Blicken der Betrachter entzogen ist. Eventuell verbleibende Bearbeitungsspuren stören auf diese Weise nicht den ästhetischen Eindruck. Die Verbindung zwischen Zahnmodul und Halterung ist vorteilhafterweise vollflächig. Damit steht die gesamte Unterseite zur Kraftübertragung zur Verfügung, so dass die spezifische Belastung sinkt und Lastspitzen vermieden werden. - In einem Beispeil das nicht Teil der Erfindung ist, braucht die Verbindung der Halterung mit dem Zahnmodul nicht unbedingt an der Unterseite ausgeführt zu sein, sie kann auch über eine Seitenfläche erfolgen. Damit ergibt sich der Vorteil einer zentralen Befestigung des Zahnmoduls. Die bei der weiteren Bearbeitung auftretenden Bearbeitungskräfte wirken dann mit einem geringeren Hebelarm auf die Verbindung mit der Halterung ein. Die Verbindung wird dadurch weniger belastet.

Vorzugsweise erfolgt das Herstellen der Verbindung zwischen der Halterung und dem Zahnmodul kleberfrei. Bewährt hat es sich, die Verbindung durch Direktverbinden herzustellen. Dies ist ermöglicht, da das Zahnmodul wie auch die Halterung aus demselben Material hergestellt sind. Vorzugsweise ist die Halterung so ausgebildet, dass sie ein Zahnmodulverbindungsteil und ein als Ausleger ausgebildetes Befestigungsteil aufweist. Das Vorsehen eines Auslegers an der Halterung ermöglicht eine günstigere, schwerpunktnahe Befestigung des Zahnmoduls. Besonders zweckmäßig ist es, den Ausleger als Seitenausleger auszubilden. Dies ermöglicht es, das Zahnmodul auf Höhe des Schwerpunkts an einer Bearbeitungsvorrichtung aufzunehmen. Außerdem ergibt sich damit ein recht kurzer Hebelarm zwischen dem Zahnmodul und der Aufnahme an der Bearbeitungsmaschine. Die aufgrund der Elastizität des verwendeten Materials unvermeidlichen Auslenkungen des Zahnmoduls bei der Bearbeitung werden damit minimiert. Dazu ist das Befestigungsteil vorzugsweise so ausgebildet, dass es mindestens den auftretenden Bearbeitungskräften standhält.

Bei einem bewährten Ausführungsteil ist an dem Befestigungsteil ein keilförmiger Fuß ausgebildet. Die Keilform verbindet den Vorzug einer großen Befestigungsfläche mit dem Vorteil einer möglichst guten Zugänglichkeit des Zahnmoduls. Zudem bietet sie einen sicheren Halt, da die Materialstärke in Zonen steigender Belastung erhöht ist. Sie ist damit eine einerseits sehr belastungsfeste und andererseits für einen guten Zugang förderliche Befestigungsweise.

Vorzugsweise handelt es sich bei dem Zahnmodul um ein Modul für Front- und Seitenzähne. Frontzähne unterscheiden sich von den Seitenzähnen in zweierlei Hinsicht. Zum einen nehmen sie eine andere Funktion wahr, nämlich Schneiden der Speisen anstatt Zermahlen, und zum anderen sind sie die am besten sichtbarsten Zähne. Ihr ästhetischer Eindruck ist damit von außerordentlicher Bedeutung. Damit sie ein möglichst natürliches Aussehen haben, müssen sie eine hohe Oberflächenqualität aufweisen. Anders als bei herkömmlichen Fräsverfahren ermöglicht es das erfindungsgemäße Herstellungsverfahren, auch bei einem aus Kunststoffmaterial hergestellten Frontzahnmodul eine hohe Oberflächengüte zu erreichen. Der gewünschte ästhetische Eindruck kann damit erreicht werden. Damit ermöglicht es die Erfindung, preisgünstigeres Kunststoffmaterial zur Herstellung von Kronen sowohl im Front- als auch im Seitenzahnbereich zu verwenden.

Zweckmäßigerweise umfasst die Erfindung weiter einen Maschinenadapter, wobei die Halterung zur Verbindung mit diesem ausgebildet ist. Damit ist es ermöglicht, den Rohling auf einfache Weise in eine Bearbeitungsmaschine einzusetzen. Dank der maßgenauen Verbindung zwischen dem Zahnmodul einerseits und der Halterung andererseits kann damit eine hochpräzise Bearbeitung des Rohlings erfolgen.

Es hat sich bewährt, in den Maschinenadapter mindestens einen Kanal zum Zuführen von Formstoff und/oder Klebstoff für den Rohling vorzusehen. Durch die Zufuhr von Formstoff bzw. Klebstoff kann z.B. das Zahnmodul mit der Halterung sicher an den Maschinenadapter befestigt werden. Weiter ist es möglich, andersfarbiges Material zuzuführen, so einen auch optisch wahrnehmbaren Unterschied zwischen verschiedenen Bereichen des Rohlings herzustellen. Dies braucht nicht auf die optische Trennung zwischen Zahnmodul einerseits und Halterung andererseits beschränkt zu sein, sondern es soll auch ermöglicht sein, bei Bedarf verschiedene Farben für das Zahnmodul zu verwenden. Dies kann mit Vorteil zur natürlichen Einfärbung genutzt werden, oder aber auch zur Erzielung besonderer optischer Effekte. Es können auch mehrere Kanäle in dem Maschinenadapter vorgesehen sein. Die Anordnung kann zentrisch oder exzentrisch erfolgen.

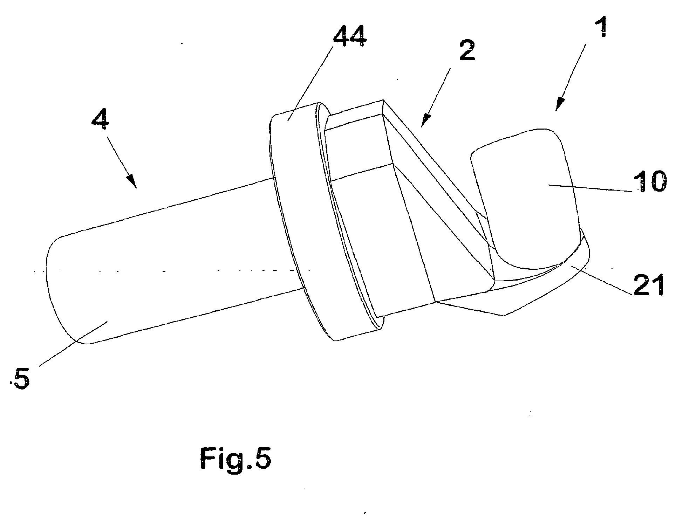

Die Erfindung wird nachfolgend beispielhaft unter Bezugnahme auf die Figuren 1 bis 5 erläutert, in denen eine vorteilhafte Ausführungsform dargestellt ist.

Es zeigen:
- Fig. 1: ein als Frontzahn ausgebildetes Zahnmodul;
- Fig. 2: eine zur Verbindung mit dem Zahnmodul vorgesehene Halterung gemäß einem ersten Ausführungsbeispiel;
- Fig. 3: Zahnmodul und Halterung im verbundenen Zustand;
- Fig. 4: ein Maschinenadapter zur Aufnahme in der Halterung;
- Fig. 5: eine perspektivische Ansicht des Zahnmoduls gemäß Fig. 3 mit angesetztem Maschinenadapter; und
- Fig. 6: eine Halterung gemäß einem Ausführungsbei- spiel, das nicht Teil der Erfindung ist, im verbundenen Zustand mit dem Zahnmodul; und

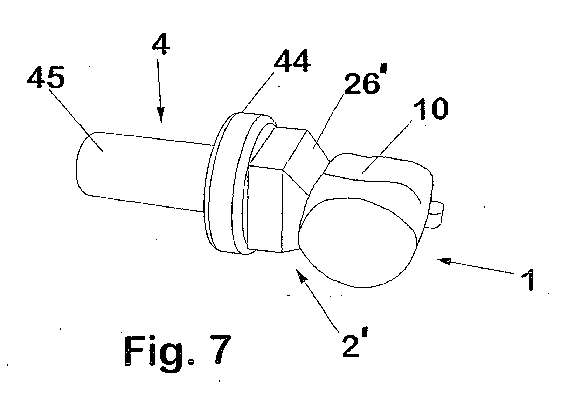

- Fig. 7: eine perspektivische Ansicht des Implantats gemäß Fig. 6 mit angesetztem Maschinenadapter.

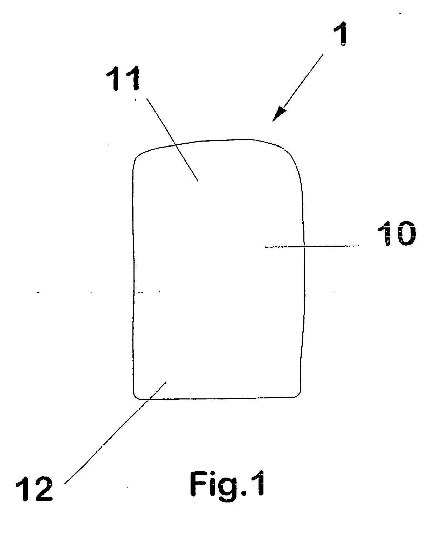

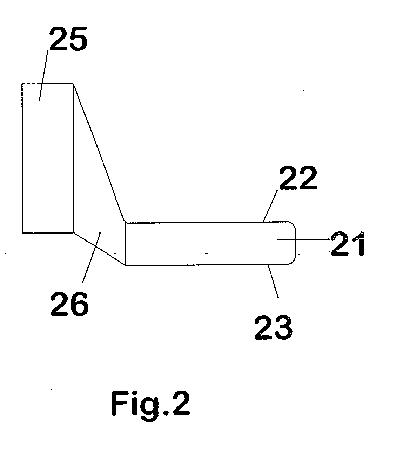

In den Fig. 1 und 2 sind die Module für das erfindungsgemäße Herstellungsverfahren dargestellt. In Fig. 1 ist ein Frontzahnmodul 1 dargestellt. Es umfasst einen Zahnkörper 10 mit einer (in der Zeichnung oben liegenden) Biss- oder Schneidfläche 11. An der gegenüberliegenden (in der Zeichnung unteren) Seite ist eine als Unterseite bezeichnete Verbindungsfläche vorgesehen. Der Zahn besteht aus einem Kunststoffmaterial wie z.B. PMMA (Polymethylmethacrylat). Als Formstoff für das Zahnimplantat kommt aber nicht nur Kunststoffmaterial, sondern auch andere in der genannten Weise verarbeitbare Materialien in Betracht. Insbesondere kann als Material auch Keramik oder mit Glaskeramik gefülltes Kunststoffmaterial vorgesehen sein. Geeignete Kunststoffmaterialien sind insbesondere solche auf Basis radikalisch polymerisierbarer Monomere, die vorzugsweise zusätzlich einen anorganischen Füllstoff enthalten. Als anorganischer Füllstoff kommt insbesondere Si02, Gläser, Keramik- oder Glaskeramik sowie Appatit-Bestandteile in Betracht. Ferner kommen in Betracht Materialien, bei denen der oder die anorganischen Bestandteile mehrheitlich überwiegen und Pastifizierungsmittel zur pastösen Verarbeitung zugesetzt werden.

Es kann sich dabei insbesondere um einen auf bekannte Weise hergestellten Konfektionszahn handeln, wie er für Zahnprothesen verwendet wird. Die Unterseite 12 ist vorzugsweise eben. Diese dienen dazu, den Übergang zu dem anschließenden Modul zumindest teilweise zu verblenden. Der Zahnkörper 10 kann einen geschichteten Aufbau aufweisen, wobei Schattierungsschichten eingebracht sind, um einen möglichst natürlich aussehenden Ausdruck zu erreichen. Dies gilt insbesondere für den Bereich der als Schneidkante ausgebildeten Bissfläche 11.

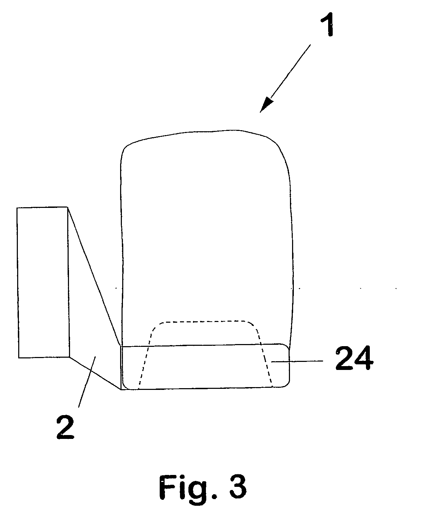

In Fig. 2 ist die Halterung dargestellt, die in ihrer Gesamtheit mit der Bezugsziffer 2 bezeichnet ist. Sie umfasst ein Verbindungsteil 21 mit einer zur Verbindung mit dem Frontzahnmodul 1 vorgesehenen Oberseite 22, einem Fuß 26 und einen Flansch 25. Der Fuß 26 erstreckt sich von dem plättchenartig ausgebildeten Verbindungsteil 21 nach schräg oben in einen Bereich oberhalb der Oberseite 22, wobei der Raum unmittelbar über der Oberseite 22 zur Aufnahme des Frontzahnmoduls 1 frei bleibt. Der Fuß 26 ist keilförmig ausgebildet mit einem schmalen ersten Querschnitt im Bereich des Übergangs zum Verbindungsteil 21 und einem wesentlich breiteren, im dargestellten Ausführungsbeispiel, ist der Querschnitt im Bereich des Übergangs zum Befestigungsflansch 25 etwa viermal so stark. Diese keilförmige Gestaltung hat den Effekt, dass zwischen dem Fuß 26 und dem Frontzahnmodul 1 im aufgesetzten Zustand ein sich von der Oberseite 22 nach oben hin weitender Spalt bildet (siehe Fig. 3). Dieser Spalt ermöglicht eine gute Zugänglichkeit des Frontzahnmoduls für nachfolgende Bearbeitungsschritte.

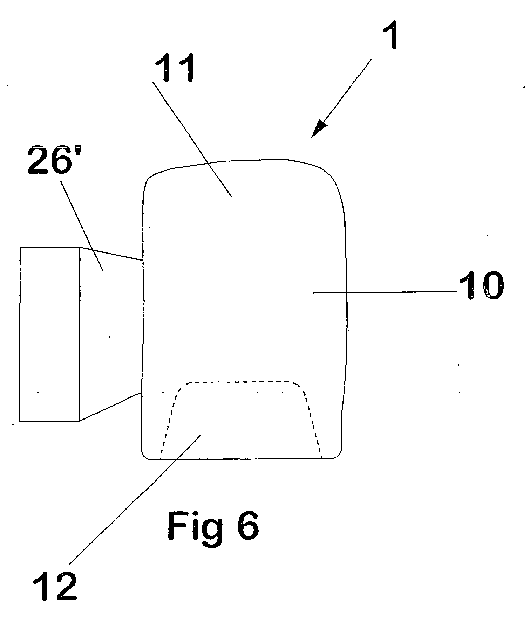

Eine alternative Ausführungsform für die Halterung, die nicht Teil der Erfindung ist, ist in Fig. 6 dargestellt und in ihrer Gesamtheit mit der Bezugsziffer 2' bezeichnet. Ihr Aufbau ist im Wesentlichen ähnlich zu der Halterung 2 gemäß dem ersten Ausführungsbeispiel. Nachfolgend werden nur die Unterschiede kurz vorgestellt.

Die Halterung 2' weist einen Fuß 26' auf, der abweichend ausgebildet ist. Er ist so gestaltet, dass er das Frontzahnmodul 1 im aufgesetzten Zustand an dessen distaler Seite kontaktiert. Das Frontzahnmodul 1 ist damit in einem zentralen Bereich gehalten, so dass sich bei der Bearbeitung auf Grund kurzer Hebelwege nur geringe Drehmomente ausbilden können. Der Gefahr einer Lockerung oder gar Lösung der Verbindung zwischen dem Frontzahnmodul 1 und der Halterung 2' wird damit entgegen gewirkt. Weiter hat dieses Ausführungsbeispiel den Vorteil, dass eine besonders gute zugänglichkeit der Unterseite 12 erreicht wird. Die weitere Bearbeitung vereinfacht sich dadurch.

Die weiteren Erläuterungen orientieren sich an dem ersten Ausführungsbeispiel. Für das zweite Ausführungsbeispiel gelten sie sinngemäß. An der dem Fuß 26 gegenüberliegenden Seite des Befestigungsflansches 25 ist eine Aufnahmefläche für einen Maschinenadapter 4 vorgesehen. Diese Aufnahmefläche ist im wesentlichen plan. Die plane Aufnahmefläche dient zur winkelrichtigen Anlage der Halterung 2 an dem Maschinenadapter 4.

Bei einer beliebigen Maschinenanbindung 45 muss im gegenüberliegenden Teil eine entsprechende Anlagefläche 43 und ein Befestigungszapfen 41 mit ausgebildeten Nuten 42 angebracht sein.

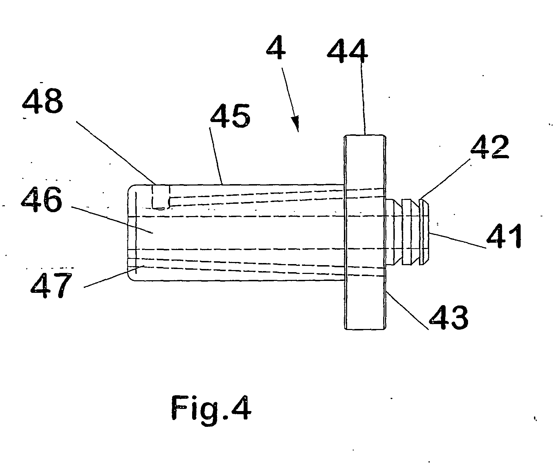

Der in Fig. 4 dargestellte Maschinenadapter 4 weist optionale, mit gestrichelten Linien dargestellte Kanäle 46, 47, 48 auf. Der Kanal 46 läuft durch den Hauptkörper der Maschinenanbindung 45 bis zum gegenüberliegenden Ende und mündet am äußeren Ende des Befestigungszapfens 41. Dieser Kanal 46 weist einen verhältnismäßig großen Querschnitt auf. Er dient vorzugsweise dazu, Formstoff, d.h. das Material aus dem das Zahnmodul 1 und die Halterung 2 bestehen, durch den Maschinenadapter 4 zu führen. Der Kanal 47 verläuft ähnlich wie der Kanal 46, ist aber von geringerem Querschnitt und mündet nicht am fernen Ende des Befestigungszapfens 41, sondern in der Anlagefläche 43. Über diesen Kanal 47 kann Formstoff, insbesondere zur Bildung der Haltung 2, zugeführt werden. Der Kanal 47 kann insbesondere auch dazu verwendet werden, den Formstoff in einer anderen Farbe zuzuführen, um seine optische Trennung insbesondere zwischen Zahnmodul 1 und Halterung 2 zu erreichen. Schließlich ist noch ein dritter Kanal 48 vorgesehen, der ähnlich wie der Kanal 47 verläuft, jedoch einen Ursprung in der Mantelfläche des Hauptkörpers der Maschinenanbindung 45 hat. Über diesen Kanal 48 kann insbesondere Klebstoff zur Anlagefläche 43 zugeführt werden. Es versteht sich, daß die Kanäle nicht zwingend ausschließlich nur für die Zuführung von Formstoff einerseits oder Klebstoff andererseits verwendet werden können, sondern auch abwechselnd Formstoff bzw. Klebstoff führen können.

Die Herstellung erfolgt auf folgende Weise. Zuerst wird in einem ersten Prozess das Frontzahnmodul 1 hergestellt. Bei diesem Prozess, der aus der Herstellung von Konfektionszähnen für Zahnprothesen bekannt ist und daher hier nicht näher beschrieben zu werden braucht, wird das Zahnmodul 1 aus Kunststoffmaterial hergestellt. Dieser Prozess ermöglicht die Erzeugung einer besonders hohen Oberflächengüte, die dem Zahnmodul 1 ein natürlich wirkendes Aussehen verleiht.

Dieses Zahnmodul 1 kann nicht direkt als Krone verwendet werden sondern es muss noch mit einer Halterung versehen werden, welche eine Präparation zur Aufnahme eines Verankerungselements zur Befestigung des Zahnmoduls im Kiefer erhält. Um die natürlich wirkende Oberfläche des Zahnmoduls 1 nicht zu beschädigen, wird die Präparation nicht unmittelbar an dem Zahnmodul 1 vorgenommen, sondern das Zahnmodul 1 muss mittels einer Halterung 2 an der Bearbeitungsmaschine angeordnet werden. Dazu wird die vorzugsweise aus demselben Kunststoffmaterial wie das Zahnmodul 1 hergestellte Halterung 2 erfindungsgemäß mit dem Zahnmodul 1 verbunden.

Grundsätzlich wäre es zwar möglich, das Zahnmodul 1 und die Halterung 2 in einem Prozessschritt aus demselben Material en bloc herzustellen. Dies bringt jedoch den Nachteil mit sich, dass aufgrund von unvermeidlicher Schwindung des Kunststoffmaterials eine nur geringe Maßhaltigkeit erzielt werden könnte. Deshalb sieht die Erfindung vor, das Zahnmodul 1 und die Halterung 2 gesondert aus demselben Material herzustellen und diese beiden Module dann nachfolgend zu verbinden.

Zur Verbindung des Zahnmoduls 1 mit der Halterung 2 wird eine kleberfreie Verbindungstechnik verwendet. Dies kann insbesondere durch eine Verbindungen geschehen, indem die aneinander zu fügenden Verbindungsflächen, nämlich die Unterseite 11 des Zahnmoduls 1 und die Oberseite 22 der Halterung 2, mit dem gleichen Material durch einen chemischthermoplastischen Prozess verbunden werden. Dadurch ergibt sich eine innige Verbindung, die in ihrem Erscheinungsbild einer nahtlosen Verbindung gleichkommt. Mit dieser in einem zweiten Herstellungsschritt erfolgten Verbindung ist die Herstellung des Rohlings für die Krone abgeschlossen. Dies kann serienmäßig erfolgen und die Rohlinge können gelagert werden.

Zur Vorbereitung des Einsetzens muss der Rohling noch angepasst werden und dazu mit der Präparation (Aufnahme für das im Kiefer befestigte Verankerungselement = Implantat oder Zahnstumpf) an der Unterseite versehen werden. Dies geschieht vorzugsweise durch maschinelle Bearbeitung. Nach dem Einsetzen in die Bearbeitungsmaschine, insbesondere einer rechnergesteuerten Fräse, können die zum Einsetzen erforderlichen Arbeiten vorgenommen werden. An der Unterseite 23 der Halterung 2 wird die Präparation (siehe gestrichelte Linie 24 in Fig. 3) hergestellt. Dank der mit dem Zahnmodul 1 innig verbundenen Halterung 2, 2', die wiederum fest auf dem Maschinenadapter 4 sitzt, ist dabei eine hohe Positionierungsgenauigkeit und damit gute Maßhaltigkeit gewährleistet. Wenn dies abgeschlossen ist, so braucht nur noch der Fuß 26, 26' an seiner Übergangsstelle zur Halterungsplatte 21 abgetrennt zu werden. Damit dies leicht gelingt, ist der Übergang vom Querschnitt her so klein wie möglich gewählt. Er muss allerdings so gestaltet sein, dass er den auftretenden Bearbeitungskräften standhält. Nach der Durchtrennung in diesem Bereich ist der so geschaffene Zahnersatz fertig zum Einsetzen. Manuelle Nacharbeiten sind nicht mehr oder nur im geringen Maß erforderlich.

## Patentansprüche

1. Verfahren zur Herstellung einer Zahnkrone als Endversorgung, wobei der Rohling ein Zahnmodul (1) und eine Halterung (2) umfasst, umfassend Herstellen des Zahnmoduls (1) in einem ersten Prozess mit hoher Oberflächengüte und Ausbilden einer Ausnehmung als Präparation, die zur Befestigung an einer im Kiefer angeordneten Verankerung dient,
Herstellen der Halterung (2, 2') aus demselben Material wie das Zahnmodul (1) und Zusammenfügen des Zahnmoduls (1) und der Halterung (2, 2') zu einer Einheit in einem zweiten Prozess, der weiter das Ausbilden der Präparation an der Unterseite der Halterung (2) umfasst, wobei
die Halterung (2, 2') mit dem Zahnmodul (1) an dessen Unterseite (12) verbunden wird.

2. Herstellungsverfahren nach Anspruch 1,
**gekennzeichnet dadurch, dass**
die Halterung (2, 2') und das Zahnmodul (1) vollflächig verbunden sind.

3. Herstellungsverfahren nach Anspruch 2,
**gekennzeichnet durch**,
Ausbilden der Halterung (2, 2') mit einem Zahnmodulverbindungsteil (21) und einem als Ausleger, vorzugsweise als Seitenausleger, ausgebildeten Befestigungsteil (26).

4. Herstellungsverfahren nach Anspruch 2 oder 3,
**dadurch gekennzeichnet dass,**
das Befestigungsteil (26) zur Aufnahme der bei maschineller Bearbeitung auftretenden Kräfte so ausgebildet ist, dass es sich mindestens in geeigneter Weise über die Höhe des Zahnmoduls (1) erstreckt.

5. Herstellungsverfahren nach einem der Ansprüche 2 bis 4,
**gekennzeichnet durch**,
Ausbilden des Befestigungsteils (26).

6. Herstellungsverfahren nach einem der Ansprüche 1 bis 5,
**dadurch gekennzeichnet, dass**
die Zahnkrone mehrteilig und verbunden ausgeführt ist.

7. Herstellungsverfahren nach einem der Ansprüche 1 bis 6,
**gekennzeichnet durch**,
Verwenden eines Frontzahnmoduls (1) als Zahnmodul.

8. Herstellungsverfahren nach einem der vorhergehenden Ansprüche,
**gekennzeichnet durch**
Verwenden eines Maschinenadapters (4) und
Ausbilden der Halterung (2) zur Verbindung mit dem Maschinenadapter (4).

9. Herstellungsverfahren nach Anspruch 8,
**dadurch gekennzeichnet, dass**
in den Maschinenadapter (4) mindestens ein Kanal (46, 47, 48) zum Zuführen von Formstoff und/oder Klebstoff für den Rohling vorgesehen ist.

10. Verfahren nach einem der vorangegangenen Ansprüche,
**gekennzeichnet durch**
als Material Kunststoff, Keramik oder mit Glaskeramik gefülltes Kunststoffmaterial verwendet wird.

## Claims

1. Method for producing a permanent dental crown, the blank comprising a tooth module (1) and a support (2), in which method the tooth module (1) is produced in a first process with a high surface quality, and a recess is formed as a preparation which serves for connection to an anchor arranged in the jaw, the support (2, 2') is produced from the same material as the tooth module (1), and the tooth module (1) and the support (2, 2') are joined together to form one unit in a second process, which further comprises the preparation being formed on the underside of the support (2), the support (2, 2') being connected to the underside (12) of the tooth module (1).

2. Production method according to Claim 1, **characterized in that** the support (2, 2') and the tooth module (1) are connected over their full surface.

3. Production method according to Claim 2, **characterized by** designing the support (2, 2') with a tooth module connection part (21) and with a securing part (26) designed as an extension arm, preferably as a lateral extension arm.

4. Production method according to Claim 2 or 3, **characterized in that** the securing part (26) for taking up the forces that occur during machining is designed such that it extends at least along the height of the tooth module (1).

5. Production method according to one of Claims 2 to 4, **characterized by** formation of the securing part (26).

6. Production method according to one of Claims 1 to 5, **characterized in that** the dental crown is made up of several interconnected parts.

7. Production method according to one of Claims 1 to 6, **characterized by** using a front tooth module (1) as the tooth module.

8. Production method according to one of the preceding claims, **characterized by** using a machine adapter (4) and designing the support (2) for connection to the machine adapter (4).

9. Production method according to Claim 8, **characterized in that** at least one channel (46, 47, 48) for delivering moulding material and/or adhesive for the blank is provided in the machine adapter (4).

10. Method according to one of the preceding claims, **characterized in that** the material used is plastic, ceramic, or plastic material filled with glass ceramic.

## Revendications

1. Procédé de fabrication d'une couronne dentaire en tant que produit final, le produit brut comportant un module de dent (1) et un support (2), comprenant la fabrication du module de dent (1) dans un processus à surface à haute précision et la formation d'un évidement comme préparation pour la fixation à un implant disposé dans la mâchoire,
fabrication du support (2, 2') dans le même matériau que le module de dent (1) et réunion du module de dent (1) et du support (2, 2') en une unité dans un second processus qui comporte de plus la production de la préparation sur la face inférieure du support (2),
le support (2, 2') étant relié au module de dent (1) à la face inférieure (12) de celui-ci.

2. Procédé de fabrication selon la revendication 1, **caractérisé par le fait que** le support (2, 2') et le module de dent (1) sont reliés de façon avec leurs surfaces ajustées.

3. Procédé de fabrication selon la revendication 2, **caractérisé par** la production du support (2, 2') avec une partie de liaison pour le module de dent et une pièce de fixation (26) configurée en bras en porte à faux, de préférence en bras en porte à faux latéral.

4. Procédé de fabrication selon la revendication 2 ou 3, **caractérisé par le fait que** la pièce de fixation (26) est constituée de telle façon, pour absorber les forces générées lors de l'usinage par la machine, qu'elle s'étende, au moins de manière appropriée sur la hauteur du module de dent (1).

5. Procédé de fabrication selon l'une des revendications 2 à 4, **caractérisé par** la formation de la pièce de fixation (26).

6. Procédé de fabrication selon l'une des revendications 1 à 5, **caractérisé en ce que** la couronne dentaire est réalisée en plusieurs parties réunies.

7. Procédé de fabrication selon l'une des revendications 1 à 6, **caractérisé par** l'utilisation d'un module de dent de devant (1) comme module de dent.

8. Procédé de fabrication selon l'une des revendications précédentes, **caractérisé par** l'utilisation d'un adaptateur mécanique (4) et
la formation du support (2) pour la liaison avec l'adaptateur mécanique (4).

9. Procédé de fabrication selon la revendication 8, **caractérisé par le fait qu'**il est prévu au moins un canal (46, 47, 48), pour l'amenée de matière constituante et ou d'adhésif pour le produit brut, dans l'adaptateur mécanique.

10. Procédé de fabrication selon l'une des revendications précédentes, **caractérisé par** l'utilisation de matière plastique, de céramique ou de matière synthétique remplie de vitrocéramique comme matériau.
